# EUROPÄISCHE PATENTSCHRIFT

(11) **EP 1 743 958 B1**
(45) Veröffentlichungstag und Bekanntmachung des Hinweises auf die Patenterteilung: **08.12.2010**
(21) Anmeldenummer: 06405258.2
(22) Anmeldetag: 16.06.2006
(51) Int. Cl.: C23C 30/00, F01D 5/20

(54) **Verfahren zum Behandeln der Schaufelspitze einer Turbinenschaufel sowie mit einem solchen Verfahren behandelte Turbinenschaufel**
Process for treating the tip of a turbine blade and turbine blade treated by such a process
Procédé de traitement de l'extrémité d'une aube de turbine et aube de turbine ainsi traitée

(30) Priorität: 14.07.2005 EP 05405436
(43) Veröffentlichungstag der Anmeldung: 17.01.2007
(73) Patentinhaber: Sulzer Metco (US) Inc., Westbury, NY 11590 (US)
(72) Erfinder: Wilson, Scott, 8404 Winterthur (CH)
(74) Vertreter: Sulzer Management AG

(56) Entgegenhaltungen:
- EP-A- 0 272 197
- WO-A-87/07197
- GB-A- 2 301 110
- US-A- 4 249 913
- US-A- 5 997 248

## Beschreibung

Die Erfindung betrifft ein Verfahren zum Behandeln der Schaufelspitze einer Turbinenschaufel sowie eine mit einem solchen Verfahren behandelte Turbinenschaufel gemäss dem Oberbegriff des unabhängigen Anspruchs der jeweiligen Kategorie.

Beim Betrieb von Turbinen, die beispielsweise als Triebwerke für Flugzeuge oder als landgestützte industrielle Gasturbinen eingesetzt werden, ist es im Hinblick auf die Effizienz wünschenswert, den Zwischenraum zwischen den Schaufelspitzen der Turbinen und den entsprechenden Dichtungen im Gehäuse möglichst gering zu halten. Ist dieser Spalt zu gross, so reduziert dies den Wirkungsgrad der Turbine, weil eine zu grosse Menge der hochenergetischen Gase ungenutzt durch diesen Spalt entweichen kann. Daher werden heute die Schaufelspitzen der Turbinenschaufeln mit Anstreifschichten (abrasive coatings) versehen, die es ermöglichen, dass sich die Turbinenschaufeln - zumindest in den ersten Betriebsstunden - bei der Rotation ihren eigenen Weg in die Dichtungen (abradable seals) schneiden. Die Anstreifschichten enthalten üblicherweise harte schleif- bzw. schneidfähige Partikel, die sich in die Dichtung einschneiden. Es ist bekannt, diese Partikel in eine oxidationsresistente metallische Matrix einzubetten, die auf der Oberfläche der Schaufelspitze vorgesehen ist.

Aus der US-A-5,935,407 ist es beispielsweise bekannt, durch galvanische Techniken die Partikel in eine metallische Matrix einzubetten. Als harte schleiffähige Partikel offenbart diese Druckschrift kubisches Bornitrid (cBN), eine Keramik, die heute häufig für derartige Anwendungen verwendet wird. Die cBN-Partikel haben jedoch die Eigenschaft, dass sie bei höheren Temperaturen von beispielsweise mehr als 800°C rasch oxidieren, sodass die Anstreifschicht in erheblichem Masse degradiert.

Ferner ist es bekannt, als harte Partikel in der Anstreifschicht Siliziumcarbid (SiC) zu verwenden (siehe z. B. US-A-4,249,913). SiC hat jedoch den Nachteil, dass es thermodynamisch nicht stabil genug ist, insbesondere wenn es in Kontakt mit Superlegierungen (superalloys) kommt. Gerade für Turbinen, die bei sehr hohen Temperaturen betrieben werden, ist es heute aber üblich, die Turbinenschaufeln aus solchen Superlegierungen, welche üblicherweise Nickel- oder Kobaltbasislegierungen sind, herzustellen. Aufgrund seiner thermodynamischen Instabilität kommt es z.B. beim Kontakt von SiC mit Nickel zur Ausbildung von Siliziden, was zur Degradation des SiC und damit der Anstreifschicht führt. Zur Lösung dieses Problems wird in der US-A-4,249,913 vorgeschlagen, die SiC-Partikel mit Aluminiumoxid (Al₂O₃) zu beschichten, um so einen direkten Kontakt des SiC mit der metallischen Matrix und somit eine Diffusion und/oder Reaktion des Siliziums mit der metallischen Matrix zu verhindern. Nachteilig an dieser Lösung ist es jedoch, dass bei Verletzungen wie Rissen oder Sprüngen in der Aluminiumoxidschicht wieder ein direkter Kontakt zwischen dem Silizium und der metallischen Matrix möglich ist, was zur Degradation der SiC-Partikel und damit der Anstreifschicht führt.

Ausgehend von diesem Stand der Technik ist es daher eine Aufgabe der Erfindung, ein Verfahren zum Behandeln der Schaufelspitze einer Turbinenschaufel vorzuschlagen, das die Erzeugung einer Anstreifschicht ermöglicht, die bei guten Schneid- bzw. Schleifeigenschaften eine erhöhte Resistenz gegen Degradationseffekte aufweist. Ferner ist es eine Aufgabe der Erfindung, eine derartig behandelte Turbinenschaufel vorzuschlagen.

Die diese Aufgabe lösenden Gegenstände der Erfindung sind durch die Merkmale der unabhängigen Ansprüche der jeweiligen Kategorie gekennzeichnet.

Erfindungsgemäss wird also ein Verfahren zum Behandeln der Schaufelspitze einer Turbinenschaufel vorgeschlagen, bei welchem zur Erzeugung einer Anstreifschicht Siliziumcarbid (SiC)-Partikel an die Oberfläche der Schaufelspitze gebunden werden, wobei auf den SiC-Partikeln eine selbstheilende Sperrschicht erzeugt wird.

Dadurch dass die Sperrschicht, die als Diffusions- und Reaktionssperre dient, selbstheilend ist, führen auch Risse in der Beschichtung der SiC-Partikel nicht zu einer Degradation, weil diese Risse durch die selbstheilenden Eigenschaften wieder verschlossen werden und somit ein Kontakt zwischen den SiC-Partikeln und metallischen Komponenten dauerhaft unterbunden wird. Daraus resultiert eine deutliche Erhöhung der Lebenszeit der Anstreifschicht auf der Schaufelspitze.

In einer bevorzugten Verfahrensführung wird die selbstheilende Sperrschicht auf den SiC-Partikeln erzeugt, bevor die SiC-Partikel auf die Oberfläche der Schaufelspitze aufgebracht werden. Dies ermöglicht eine einfache und effizient Beschichtung der SiC-Partikel.

Die selbstheilende Sperrschicht wird durch Beschichten mit einem Material erzeugt, welches aus der Gruppe bestehend aus Chrom (Cr), Zirkon (Zr), Titan (Ti), Tantal (Ta), Niob (Nb), Hafnium (Hf), Yttrium (Y), Scandium (Sc), Thorium (Th), Uran (U), Molybdän (Mo) sowie Legierungen der genannten Elemente gewählt wird. Die Beschichtung mit diesen Materialien führt zur Bildung von guten Sperrschichten, die selbstheilend sind.

Besonders bevorzugt wird die Sperrschicht durch Beschichten mit Chrom oder mit einer Chromlegierung erzeugt. Durch Beschichten mit Chrom bildet sich an der Cr-SiC-Grenze eine thermodynamisch stabile Chrom-SiliziumCarbid-Schicht Cr₅Si₃C, die eine Sperre für Diffusions- und chemische Reaktionsprozesse bildet. Sollte sich ein Riss bilden, der durch die Cr-SiC-Grenzschicht hindurch reicht, so wandert Chrom in den Bereich dieses Risses, wodurch dieser verschlossen wird.

Gemäss einer vorteilhaften Verfahrensführung werden die SiC-Partikel mittels Einbettung in eine metallische Matrix an die Oberfläche der Schaufelspitze gebunden. Es hat sich bewährt, dass die SiC-Partikel in eine MCrAIX-Matrix eingebettet werden, wobei M Nickel (Ni) und/oder Kobalt (Co) und/oder Eisen (Fe) bezeichnet und X Yttrium (Y) und/oder Zirkon (Zr) und/oder Hafnium (Hf).

Eine bevorzugte Möglichkeit zum Erzeugen der Anstreifschicht besteht darin, dass die mit der Sperrschicht versehenen SiC-Partikeln auf einem Träger, beispielsweise einer dünnen Metallplatte, befestigt werden, anschliessend durch Beschichten eine metallische Matrix erzeugt wird, in welche zumindest die dem Träger abgewandten Oberflächenbereiche der SiC-Partikel eingebettet sind, die dem Träger abgewandte Oberfläche auf der Schaufelspitze befestigt wird, und der Träger entfernt wird. Durch diese Verfahrensführung ist es gewährleistet, dass sich keine Lücken oder Löcher zwischen den SiC-Partikeln und der Oberfläche der Schaufelspitze befinden, woraus eine besonders gute und zuverlässige Fixierung der SiC-Partikel resultiert.

Eine ebenfalls bevorzugte Verfahrensvariante, welche die gleichen Vorteile mitsichbringt, wird so durchgeführt, dass SiC-Partikeln auf einem Träger, beispielsweise einer dünnen Metallplatte, befestigt werden, die Sperrschicht auf den SiC-Partikeln erzeugt wird, insbesondere mittels eines PVD-Verfahrens, anschliessend durch Beschichten eine metallische Matrix erzeugt wird, in welche zumindest die dem Träger abgewandten Oberflächenbereiche der SiC-Partikel eingebettet sind, die dem Träger abgewandte Oberfläche auf der Schaufelspitze befestigt wird, und der Träger entfernt wird.

Bei diesen beiden Verfahrensvarianten wird die dem Träger abgewandte Oberfläche vorzugsweise mittels Hartlöten (brazing) auf der Schaufelspitze befestigt.

Aus praktischen Gründen ist es bevorzugt die metallische Matrix durch eine physikalische Abscheidung aus der Dampfphase, also ein PVD-Verfahren, und insbesondere durch ein Hochgeschwindigkeits-PVD-Verfahren zu erzeugen.

Eine andere Verfahrensführung besteht darin, dass die SiC-Partikel mittels Hartlöten an die Schaufelspitze gebunden werden.

Dabei kann es vorteilhaft sein, wenn vor dem Hartlöten zunächt auf der Schaufelspitze eine MCrAIX-Schicht erzeugt wird, wobei M Nickel (Ni) und/oder Kobalt (Co) und/oder Eisen (Fe) bezeichnet und X Yttrium (Y) und/oder Zirkon (Zr) und/oder Hafnium (Hf). Die MCrAIX-Schicht wird vorzugsweise mittels einem PVD-Verfahren, insbesondere mittels Hochgeschwindigkeits-PVD erzeugt.

Eine weitere Möglichkeit besteht darin, dass die SiC-Partikel mittels Laser-Schweissen an die Schaufelspitze gebunden werden.

Insbesondere im Falle des Hartlötens der SiC-Partikel kann es vorteilhaft sein, wenn die SiC-Partikel zusätzlich zu der Sperrschicht mit einer Schutzschicht versehen werden, vorzugsweise mit einer Schutzschicht aus MCrAIX, wobei M Nickel (Ni) und/oder Kobalt (Co) und/oder Eisen (Fe) bezeichnet und X Yttrium (Y) und/oder Zirkon (Zr) und/oder Hafnium (Hf).

Die erfindungsgemässe Turbinenschaufel ist dadurch gekennzeichnet, dass sie eine Schaufelspitze aufweist, die nach einem erfindungsgemässen Verfahren behandelt ist.

Insbesondere ist dies eine Turbinenschaufel, deren Schaufelspitze mit einer Anstreifschicht versehen ist, die Siliziumcarbid (SiC)-Partikel enthält, wobei die SiC-Partikel eine selbstheilende Sperrschicht aufweisen. Die daraus resultierenden Vorteile sind analog zu denen des erfindungsgemässen Verfahrens.

Die Sperrschicht ist durch Beschichten mit einem Material erzeugt, welches aus der Gruppe bestehend aus Chrom (Cr), Zirkon (Zr), Titan (Ti), Tantal (Ta), Niob (Nb), Hafnium (Hf), Yttrium (Y), Scandium (Sc), Thorium (Th), Uran (U), Molybdän (Mo) sowie Legierungen der genannten Elemente gewählt ist.

Besonders bevorzugt ist die Sperrschicht durch Beschichten mit Chrom oder einer Chromlegierung erzeugt (chromised).

Bei einem bevorzugten Ausführungsbeispiel der Turbinenschaufel sind die SiC-Partikel mittels Einbettung in eine metallische Matrix an die Oberfläche der Schaufelspitze gebunden.

Besonders bevorzugt sind die SiC-Partikel in eine MCrAIX-Matrix eingebettet, wobei M Nickel (Ni) und/oder Kobalt (Co) und/oder Eisen (Fe) bezeichnet und X Yttrium (Y) und/oder Zirkon (Zr) und/oder Hafnium (Hf).

Weitere vorteilhafte Massnahmen und bevorzugte Ausgestaltungen der Erfindung ergeben sich aus den abhängigen Ansprüchen.

Im Folgenden wird die Erfindung anhand von Ausführungsbeispielen und anhand der Zeichnung näher erläutert. In der schematischen Zeichnung zeigen:
- Fig. 1:: ein Ausführungsbeispiel einer erfindungsgemässen Turbinenschaufel,
- Fig. 2:: eine schematische Darstellung eines SiC-Partikels mit einem Ausführungsbeispiel einer erfindungsgemässen Sperrschicht,
- Fig. 3:: ein Schnitt durch eine Anstreifschicht auf der Schaufelspitze einer Turbinenschaufel, erzeugt mit einem erfindungsgemässen Verfahren, und
- Fig. 4:: eine bevorzugte Verfahrensführung.

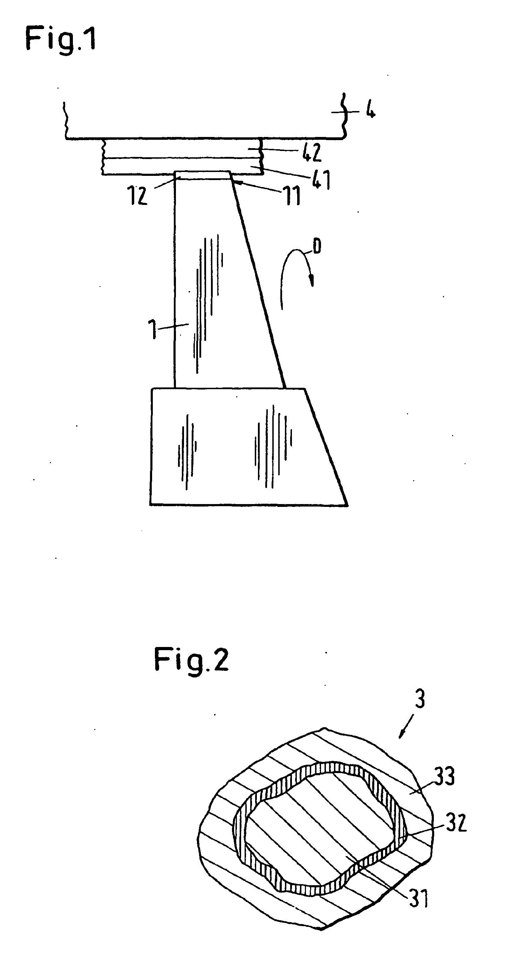

In Fig. 1 ist in schematischer Darstellung ein Ausführungsbeispiel einer erfindungsgemässen Turbinenschaufel gezeigt, die gesamthaft mit dem Bezugszeichen 1 bezeichnet ist. Die Turbinenschaufel 1 hat eine Schaufelspitze 11, womit das am weitesten von der Drehachse entfernte Ende der Turbinenschaufel 1 gemeint ist. An der Oberfläche der Schaufelspitze 11 ist eine Anstreifschicht (abrasive layer) 12 vorgesehen, welche im Betriebszustand der Turbine in an sich bekannter Weise mit einer abreibbaren Dichtung (abradable seal) 41 zusammenwirkt. Die abreibbare Dichtung 41 ist mittels eines Trägermediums 42 an einem Gehäuse 4 der Turbine befestigt. Die Dichtung 41 kann beispielsweise aus einem keramischen Material hergestellt sein. Die Anstreifschicht 12 ist mittels eines erfindungsgemässen Verfahrens erzeugt, das weiter hinten noch erläutert wird.

Die Drehrichtung der Turbinenschaufel 1 ist durch den Pfeil D angedeutet, also dreht sich die Turbinenschaufel 1 in die Zeichenebene hinein. Zumindest während der ersten Betriebsstunden der Turbineenschaufel 1 schleift oder schneidet sich die Anstreifschicht 12 ihren Weg durch die abreibbare Dichtung 41. Dies hat zur Folge, dass das Spiel bzw. der Spalt zwischen der Schaufelspitze 11 und der Dichtung 41 möglichst klein ist, sodass sehr wenig des hochenergetischen Gases ungenutzt durch diesen Spalt entweichen kann.

Das erfindungsgemässe Verfahren zum Behandeln der Schaufelspitze 11 der Turbinenschaufel 1 ist insbesondere dadurch gekennzeichnet, dass zur Erzeugung der Anstreifschicht 12 Siliziumcarbid (SiC) - Partikel an die Oberfläche der Schaufelspitze 11 gebunden werden, wobei auf den SiC-Partikeln eine selbstheilende Sperrschicht vorgesehen wird.

Fig. 2 zeigt in einer Schnittdarstellung ein Ausführungsbeispiel eines solchen beschichteten SiC-Partikel, das gesamthaft mit dem Bezugszeichen 3 versehen ist. Das beschichtete SiC-Partikel 3 umfasst das eigentliche SiC-Partikel 31, die selbstheilende Sperrschicht 32, sowie ein Material 33, mit welchem das SiC-Partikel 31 zum Erzeugen der Sperrschicht 32 beschichtet wurde.

Es ist bekannt, dass SiC thermodynamisch nicht stabil ist. Insbesondere der Kontakt mit Metallen oder metallischen Verbindungen, z.B. Nickel (Ni) bzw. Nickellegierungen führt zu Degradation des SiC. Hierbei kann es zur Ausbildung von Siliciden in Form von verschiedenen Nickel-Silicium-Verbindungen und zur Ausscheidung von reinem Kohlenstoff kommen, sodass das SiC beim Kontakt mit Ni zersetzt wird.

Ni und Ni-Legierungen kommen deshalb eine grosse Bedeutung zu, weil viele der Superlegierungen, die zur Herstellung von Turbinenschaufeln für sehr hohe Betriebstemperaturen von beispielsweise über 800°C typischerweise verwendet werden, Nickel-Basis Legierungen sind.

Um den Kontakt zwischen Nickel (oder auch einem anderen metallischen Element der Turbinenschaufel) und den SiC-Partikeln zu vermeiden ist erfindungsgemäss auf den SiC-Partikeln 31 die selbstheilende Sperrschicht 32 vorgesehen, die als Diffusions- und chemische Reaktionssperre zwischen dem SiC und seiner metallischen Umgebung dient. Hierzu ist es beispielsweise möglich, auf den SiC-Partikeln Carbide bzw. Carbidverbindungen zu erzeugen, die thermodynamisch stabiler sind als SiC.

Eine erfindungswesentliche Eigenschaft der Sperrschicht 32 ist es, dass sie selbstheilend ist. Die Sperrschicht 32 ist eine aktive Schicht, die sich im Falle von Verletzungen selbst "repariert". Das heisst, wenn es zu Rissen oder Verletzungen kommt, die sich durch die Sperrschicht 32 hindurch bis in das SiC hinein erstrecken, so diffundieren aus der Schicht mit dem Material 33 Teilchen in den Bereich des Risses bzw. der Verletzung, verbinden sich mit dem Silicium und schliessen so den Riss bzw. die Verletzung in der Sperrschicht 32. Durch diese selbstheilende Eigenschaft wird eine Degradation der SiC-Partikel 31 wirkungsvoll vermieden, wodurch eine besonders langlebige und funktionstüchtige Anstreifschicht 12 realisiert wird, die auch bei Temperaturen von über 800°C stabil bleibt, nicht oxidiert und sehr gute Schneid- bzw. Schleifeigenschaften gegenüber abreibbaren Dichtungen 41 aufweist.

Die Sperrschicht 32 wird durch Beschichten der SiC-Partikel 31 mit einem der folgenden Elemente erzeugt: Chrom (Cr), Zirkon (Zr), Titan (Ti), Tantal (Ta), Niob (Nb), Hafnium (Hf), Yttrium (Y), Scandium (Sc), Thorium (Th), Uran (U), Molybdän (Mo). Es können auch Legierungen der genannten Elemente zum Erzeugen der Sperrschicht verwendet werden. Die Beschichtung mit diesen Elementen führt zur Ausbildung von Carbiden die thermodynamisch stabiler sind als SiC.

Im Folgenden wird mit beispielhaftem Charakter auf den für die Praxis besonders relevanten und bevorzugten Fall Bezug genommen, dass die erfindungsgemässe Sperrschicht 32 durch Beschichten der SiC-Partikel mit Chrom (Cr) erzeugt wird. Die Ausführungen gelten jedoch in sinngemäss gleicher Weise für andere Elemente oder Legierungen.

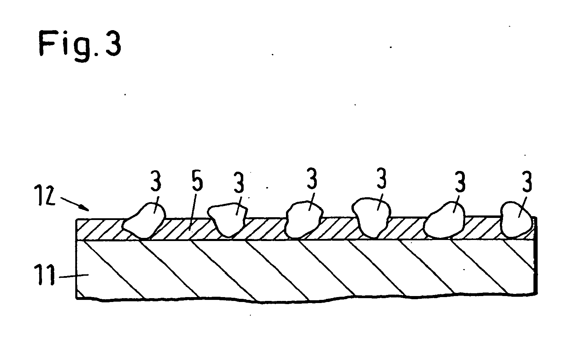

Die SiC-Partikel 3 werden vorzugsweise mittels Einbettung in eine metallische Matrix an die Oberfläche der Schaufelspitze gebunden. Fig. 3 zeigt einen Schnitt durch eine Anstreifschicht 12 auf der Schaufelspitze 11 einer Turbinenschaufel. Die beschichteten SiC-Partikel 3 sind in eine metallische Matrix 5 eingebettet, die auf der Oberfläche der Schaufelspitze 11 vorgesehen ist. Vorzugsweise ist die metallische Matrix 5 eine Matrix vom Typ MCrAIX, wobei M Nickel (Ni) und/oder Kobalt (Co) und/oder Eisen (Fe) bezeichnet und X Yttrium (Y) und/oder Zirkon (Zr) und/oder Hafnium (Hf). Besonders bevorzugt wird für X das Element Yttrium verwendet.

Im Folgenden werden einige bevorzugte Ausführungsbeispiele des erfindungsgemässen Verfahrens erläutert.

Eine bevorzugte Massnahme besteht darin, dass die SiC-Partikel 31 beschichtet werden, bevor sie auf die Oberfläche der Schaufelspitze 11 aufgebracht werden. Dazu werden als Ausgangsmaterial kommerziell erhältliche SiC-Partikel verwendet, die vorzugsweise einen Durchmesser von höchstens 500 µm (Mikrometer) und insbesondere einen Durchmesser von 300-400 µm haben. Die SiC-Partikel werden dann mit Chrom (Cr) beschichtet, sodass sie eine möglichst gleichmässige Chromschicht 33 aufweisen, die beispielsweise ungefähr 10 µm dick ist. Die Chrombeschichtung kann mittels aller an sich bekannter Verfahren erfolgen. Insbesondere sind zur Erzeugung der Chromschicht 33 thermochemische Verfahren, Packzementierung (pack cementation), physikalische oder chemische Abscheidung aus der Dampfphase (PVD: physical vapor deposition; CVD: chemical vapor deposition), Abscheidung aus Lösungen oder Aufschlämmungen (slurry) oder galvanische Verfahren geeignet. Diese Verfahren zum Erzeugungen von Chromschichten sind dem Fachmann hinlänglich bekannt und bedürfen daher hier keiner näheren Erläuterung.

Wenn die SiC-Partikel 31 (Fig. 2) mit Cr beschichtet werden, so kommt es im Grenzbereich zwischen dem SiC und dem Cr zur Ausbildung einer Chrom-Silizium-Carbid-Schicht der chemischen Zusammensetzung Cr₅Si₃C. Diese Sperrschicht 32 ist nach aussen von einer Schicht 33 aus elementarem Cr umgeben. Insbesondere hat die Cr₅Si₃C-Sperrschicht 32 selbstheilende Eigenschaften. Falls sich ein Riss entwickelt, der sich durch den Cr-SiC-Grenzbereich hindurch erstreckt, so diffundiert aus der Schicht 33 elementares Cr in den Bereich des Risses und heilt diesen aus. Dadurch wird die Diffusion anderer metallischer Elemente - wie beispielsweise Nickel - aus der Legierung, aus der die Turbinenschaufel gefertigt ist, oder aus der metallischen Matrix 5 in das SiC unterbunden und somit eine Degradation der Anstreifschicht 12 vermieden. Es hat sich gezeigt, dass das Cr-Cr₅Si₃C-SiC-System thermodynamisch und chemisch stabil ist, auch bei Temperaturen von 1000°C.

Es kann vorteilhaft sein, die die mit Chrom oder einer Chromverbindung beschichteten SiC-Partikel 3 anschliesend einer Wärmbehandlung, vorzugsweise im Bereich zwischen 900°C und 1600°C zu unterziehen, um eine besonders gute und wenig bis nicht poröse Ausbildung der Sperrschicht 32 - hier also der Cr₅Si₃C-schicht zu gewährleisten.

Nachdem die SiC-partikel 31 mit Chrom beschichtet sind müssen sie an die Oberfläche der Schaufelspitze 11 der Turbinenschaufel 1 gebunden werden. Die Turbinenschaufel ist üblicherweise aus einer Superlegierung (superalloy) hergestellt, beispielsweise einer Nickelbasis-Legierung wie sie unter dem Handelsnamen Inconel 718 erhältlich ist. Die mit der Chromschicht 33 und der Sperrschicht 32 versehenen SiC-Partikel 31 werden zunächst provisorisch auf der Oberfläche der Schaufelspitze 11 befestigt. Dies kann durch Kleben mit einem Epoxidharz oder durch einen Polymerisationsprozess erfolgen. Anschliessend wird auf der Schaufelspitze 11 die metallische Matrix 5 (siehe Fig. 3) generiert, in welche die beschichteten SiC-Partikel 3 eingebettet werden. Gemäss einer bevorzugten Verfahrensführung wird die metallische Matrix 5, die vom Typ MCrAlX ist -wobei für M das Element Ni bevorzugt wird- durch eine physikalische Abscheidung aus der Dampfphase (PVD: physical vapor deposition) generiert. Dem Fachmann sind verschiedene hierfür geeigneten PVD-Verfahren bekannt, sodass diesbezüglich keine weiteren Erläuterungen notwendig sind. Insbesondere geeignet ist das HS-PVD- Verfahren (HS: high speed), bei welchem mit besonders hohen Ablagerungsraten gearbeitet wird. Die metallische Matrix 5 wird bei diesem Ausführungsbeispiel mit einer Dicke von etwa 350 µm erzeugt. Durch die Ablagerung der metallischen Matrix 5 werden die SiC-Partikel in diese Matrix 5 eingebettet und dadurch fest an die Oberfläche der Schaufelspitze 11 gebunden. Somit erhält die Turbinenschaufel 1 auf ihrer Schaufelspitze 11 die Anstreifschicht 12, welche die beschichteten SiC-Partikel als Schleif- bzw. Schneidelemente enthält.

Alternativ ist es auch möglich, zunächst die noch nicht beschichteten SiC-Partikel 31 auf der Schaufelspitze 11 festzukleben, beispielsweise mittels eines Epoxidharzes, dann in einem ersten Schritt die SiC-Partikel 31 durch ein PVD-Verfahren mit Chrom zu beschichten, wodurch es zur Ausbildung der Sperrschicht 32 und der Chromschicht 33 kommt, und schliesslich in einem zweiten Schritt durch ein PVD-Verfahren, die metallische Matrix 5 auf der Schaufelspitze 11 zu deponieren, sodass die SiC-Partikel in die Matrix 5 eingebettet und an die Schaufelspitze 11 gebunden sind.

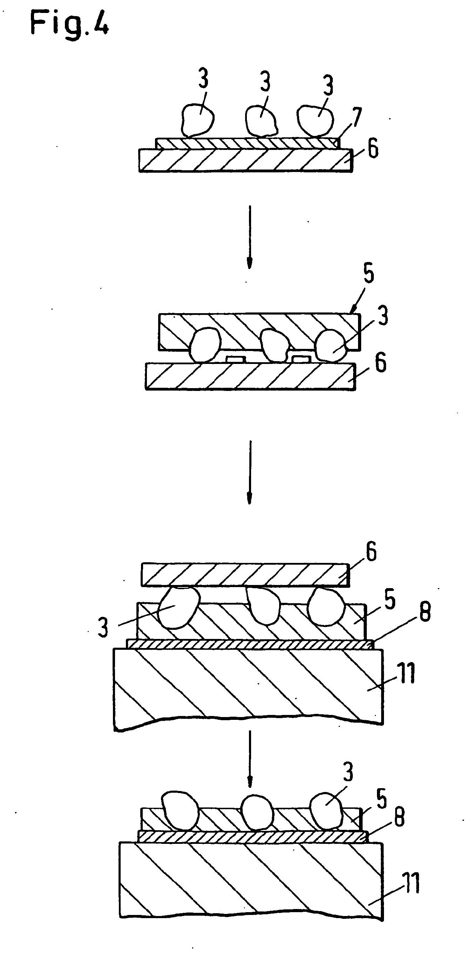

Um eine noch bessere und dauerhafte Verbindung zwischen den SiC-Partikeln 3 und der Schaufelspitze 11 zu erzielen, eignet sich die in Fig. 4 veranschaulichte Ausführungsform des erfindungsgemässen Verfahrens.

Wie dies die oberste Darstellung in Fig. 4 zeigt, werden zunächst die beschichteten SiC-Partikel 3 auf einem Träger 6 befestigt, beispielsweise durch Aufkleben mittels eines Epoxidharzes 7. Der Träger 6 ist vorzugsweise eine metallische Platte, die etwa 1-2 mm dick ist, beispielsweise eine Ni-Platte oder eine Platte aus der Nickelbasis-Legierung Inconel 718. Die auf dem Träger 6 befestigten SiC-Partikel 3 werden dann in einem PVD-Verfahren mit einer metallischen Matrix 5 vom Typ MCrAlX beschichtet, wobei M vorzugsweise Ni ist. Die metallische Matrix 5 wird mit einer Dicke von etwa 100-200 µm erzeugt. Dies ist in Fig. 4, zweite Darstellung von oben gezeigt. Durch diesen Schritt werden die darstellungsgemäss oberen Enden und vorzugsweise mindestens die oberen Hälften der Oberflächenbereiche jedes der beschichteten SiC-Partikel 3 mit der metallischen Matrix 5 beschichtet. Wie dies die dritte Darstellung von oben in Fig. 4 zeigt, wird der Träger 6 nun umgedreht und die die SiC-Partikel bedeckende Matrix 5 auf der Oberfläche der Schaufelspitze 11 mittels Hartlöten (brazing) befestigt, so dass die mit dem MCrAIX beschichteten "Füsse" der SiC-Partikel in die Hartlotschicht 8 eingebettet werden. Schliesslich wird - wie dies die unterste Darstellung in Fig. 4 zeigt, der Träger 6 entfernt. Dies kann durch Biegen, Abschälen, Schleifen oder sonst eine geeignete Bearbeitungsmethode erfolgen.

Durch diese Verfahrensführung ist es gewährleistet, dass es nicht zur Ausbildung von Hohlräumen zwischen den SiC-Partikeln und der Oberfläche der Schaufelspitze 11 kommt. Daraus resultiert eine besonders gute und zuverlässige Verbindung zwischen den SiC-Partikeln 3 und der Schaufelspitze 11, wodurch die Anstreifschicht 12 besonders gut und dauerhaft auf der Schaufelspitzee 11 fixiert ist.

Auch bei der in Fig. 4 veranschaulichten Verfahrensführung ist es alternativ möglich, zunächst die unbeschichteten SiC-Partikel 31 auf dem Träger 6 festzukleben und dann in einem ersten PVD-Verfahren die SiC-Partikel 31 mit der Chromschicht oder einer der alternativ möglichen Schichten 33 zu versehen, wodurch es zur Ausbildung der Sperrschicht 32 kommt. Die Chromschicht wird vorzugsweise mit einer Dicke von etwa 10 µm aufgetragen. Anschliessend wird ebenfalls mittels PVD eine beispielsweise 100-200 µm dicke MCrAIX-Schicht aufgebracht, wodurch die darstellungsgemäss oberen Enden und vorzugsweise mindestens die oberen Hälften der Oberflächenbereiche jedes der Cr-beschichteten SiC-Partikel 3 mit der metallischen MCrAIX-Matrix 5 beschichtet wird. Nun wird der Träger 6 mit den teilweise MCrAIX-beschichteten SiC-Partikeln 3 umgedreht und die die SiC-Partikel bedeckende MCrAIX-Matrix 5 auf der Oberfläche der Schaufelspitze 11 mittels Hartlöten (brazing) befestigt, so dass die mit dem MCrAIX beschichteten "Füsse" der SiC-Partikel in die Hartlotschicht eingebettet werden. Schliesslich wird der Träger 6 entfernt.

Alternativ zur Erzeugung der metallischen Matrix 5 mittels eines PVD-Verfahrens ist es auch möglich, die Cr-beschichteten SiC-Partikel 3 mittels Hartlöten in eine metallische Matrix einzubetten und auf der Oberfläche der Schaufelspitze 11 zu fixieren. Falls die SiC-Partikel 3 mittels Hartlöten an die Schaufelspitze gebunden werden, ist es auch vorteilhaft, zunächst die Cr-beschichteten SiC-Partikel 3 provisorisch auf der Schaufelspitze 11 zu befestigen, beispielsweise durch Kleben mittels Epoxidharz, und dann den Lötprozess zu beginnen.

Die Wahl eines geeigneten Hartlots hängt vom speziellen Anwendungsfall ab. Im Folgenden werden einige Möglichkeiten erläutert, die mit beispielhaftem Charakter auf Turbinenschaufeln 1 Bezug nehmen, die aus der Nickelbasis-Legierung Inconel 718 hergestellt sind.

Prinzipiell ist es möglich, das Hartlöten mit oder ohne Verwendung eines Füllmaterials (filler) durchzuführen. Geeignete Hartlötmaterialien sind beispielsweise solche Hartlote,die zu der Produktfamilie gehören, welche von der Anmelderin unter dem Handelsnamen Amdry vertrieben werden. Insbesondere geeignet sind beispielsweise Amdry 936 - dies ist ein Ni-Mn-Si-B-Cu-Re Hochtemperatur-Hartlötmaterial - oder Amdry 775, ein Lötmaterial auf Nickelbasis mit Cr und B (Bor). Falls ein Füllmaterial verwendet wird, ist hierzu beispielsweise Amdry 9951 geeignet. Dies ist ein Material auf Co-Basis mit Ni, Cr, Al und Y.

Auch durch den Prozess des Hartlötens kann eine MCrAIX-Matrix 5 erzeugt werden, in welche die beschichteten SiC-Partikel eingebettet sind.

Eine vorteilhafte Massnahme besteht darin, vor dem Hartlöten die Schaufelspitze 11 mit einer MCrAIX-Schicht zu versehen, die beispielsweise etwa 50 µm dick ist und vorzugsweise mittels eines PVD-Verfahrens generiert wird. Auf dieser Schicht werden anschliessend die Cr-beschichteten SiC-Partikel 3 mittels Hartlöten fixiert. Die vorgängig aufgebrachte MCrAIX-Schicht dient als zwischenliegende Barriere zwischen dem Material der Schaufelspitze 11 und den SiC-Partikeln 3, die Diffusionsprozesse, beispielsweise die Diffusion von Ni aus dem Schaufelmaterial Inconel 718 hearaus, während des Hartlötens verhindert oder zumindest stark reduziert.

Eine weitere Variante besteht darin, die beschichteten SiC-Partikel mittel Laserschweissens auf der Schaufelspitze zu fixieren. Hier besteht auch die Möglichkeit, zunächst auf der Schaufelspitze 11 mittel Laserschweissens eine MCrAIX-Schicht zu erzeugen, wobei X vorzugsweise Yttrium (Y) ist, und dann die Cr-beschichteten SiC-Partikel durch Laserschweissen auf der Schaufelspitze 11 zu fixieren, wobei vorzugsweise ein MCrAIX-reiches Füllmaterial Verwendung findet. Somit lassen sich die SiC-Partikel 3 auch mittels Laserschweissen in eine MCrAIX-Matrix auf der Schaufelspitze 11 einbetten.

Insbesondere bei den Verfahren unter Verwendung von Hartlöten und Laserschweissen kann es vorteilhaft sein, wenn die Cr-beschichteten SiC-Partikel 3 vor dem Schweiss- bzw. Laserprozess mit einer zusätliche Schutzschicht umhüllt werden. Diese Schutzschicht ist vorzugsweise auch vom Typ MCrAlX, wobei für M Nickel und für X Yttrium bevorzugt werden. Die zur Erzeugung der Schutzschicht verwendbaren Cladding-Verfahren sind an sich bekannt und bedürfen hier keiner näheren Erläuterung mehr.

Es besteht auch die Möglichkeit, auf der Schaufelspitze 11 zunächst eine MCrAIX-Matrix zu deponieren, vorzugsweise mittels eines PVD-Verfahrens, und darin die beschichteten SiC-Particel 3 galvanisch bzw. mittels elektrochemischer Verfahren einzubetten.

Es versteht sich, dass die nach dem erfindungsgemässen Verfahren behandelten Schaufelspitzen bzw. die erfindungsgemässen Turbinenschaufeln zusätzlich thermischen Behandlungen oder Nachbehandlungen unterzogen werden können. Die Optimierung solcher Behandlungen erfolfgt in Abhängigkeit des speziellen Anwendungsfalls.

## Patentansprüche

1. Verfahren zum Behandeln der Schaufelspitze einer Turbinenschaufel, bei welchem zur Erzeugung einer Anstreifschicht (12) Siliziumcarbid (SiC)-Partikel (31) an die Oberfläche der Schaufelspitze (11) gebunden werden, **dadurch gekennzeichnet, dass** auf den SiC-Partikeln (31) eine selbstheilende Sperrschicht (32) durch Beschichten mit einem Material erzeugt wird, welches aus der Gruppe bestehend aus Chrom (Cr), Zirkon (Zr), Titan (Ti), Tantal (Ta), Niob (Nb), Hafnium (Hf), Yttrium (Y), Scandium (Sc), Thorium (Th), Uran (U), Molybdän (Mo) sowie Legierungen der genannten Elemente gewählt wird.

2. Verfahren nach Anspruch 1, wobei die selbstheilende Sperrschicht (32) auf den SiC-Partikeln (31) erzeugt wird, bevor die SiC-Partikel auf die Oberfläche der Schaufelspitze (11) aufgebracht werden.

3. Verfahren nach einem der vorangehenden Ansprüche, wobei die Sperrschicht (32) durch Beschichten mit Chrom oder mit einer Chromlegierung erzeugt wird.

4. Verfahren nach einem der vorangehenden Ansprüche, wobei die SiC-Partikel (31) mittels Einbettung in eine metallische Matrix (5) an die Oberfläche der Schaufelspitze (11) gebunden werden.

5. Verfahren nach Anspruch 4, bei welchem die SiC-Partikel (31) in eine MCrAIX-Matrix (5) eingebettet werden, wobei M Nickel (Ni) und/oder Kobalt (Co) und/oder Eisen (Fe) bezeichnet und X Yttrium (Y) und/oder Zirkon (Zr) und/oder Hafnium (Hf).

6. Verfahren nach einem der vorangehenden Ansprüche, bei welchem
- die mit der Sperrschicht (32) versehenen SiC-Partikeln (31) auf einem Träger (6) befestigt werden,
- anschliessend durch Beschichten eine metallische Matrix (5) erzeugt wird, in welche zumindest die dem Träger (6) abgewandten Oberflächenbereiche der SiC-Partikel (3) eingebettet sind,
- die dem Träger (6) abgewandte Oberfläche auf der Schaufelspitze (11) befestigt wird, und
- der Träger (6) entfernt wird.

7. Verfahren nach einem der vorangehenden Ansprüche, bei welchem
- SiC-Partikeln (31) auf einem Träger (6) befestigt werden,
- die Sperrschicht (32) auf den SIC-Partikeln (31) erzeugt wird, insbesondere mittels eines PVD-Verfahrens,
- anschliessend durch Beschichten eine metallische Matrix (5) erzeugt wird, in welche zumindest die dem Träger (6) abgewandten Oberflächenbereiche der SiC-Partikel (31) eingebettet sind,
- die dem Träger (6) abgewandte Oberfläche auf der Schaufelspitze (11) befestigt wird, und
- der Träger (6) entfernt wird.

8. Verfahren nach Anspruch 6 oder 7, bei welchem die dem Träger (6) abgewandte Oberfläche mittels Hartlöten auf der Schaufelspitze (11) befestigt wird.

9. Verfahren nach einem der Ansprüche 3-8, bei welchem die metallische Matrix (5) durch eine physikalische Abscheidung aus der Dampfphase, also ein PVD-Verfahren, und insbesondere durch ein Hochgeschwindigkeits-PVD-Verfahren erzeugt wird.

10. Verfahren nach einem der Ansprüche 1-8, bei welchem die SiC-Partikel (31) mittels Hartlöten an die Schaufelspitze (11) gebunden werden.

11. Verfahren nach Anspruch 10, wobei vor dem Hartlöten zunächt auf der Schaufelspitze (11) eine MCrAIX-Schicht erzeugt wird, wobei M Nickel (Ni) und/oder Kobalt (Co) und/oder Eisen (Fe) bezeichnet und X Yttrium (Y) und/oder Zirkon (Zr) und/oder Hafnium (Hf).

12. Verfahren nach einem der Ansprüche 1-8, bei welchem die SiC-Partikel (3) mittels Laser-Schweissen an die Schaufelspitze (11) gebunden werden.

13. Verfahren nach einem der vorangehenden Ansprüche, bei welchem die SiC-Partikel (31) zusätzlich zu der Sperrschicht (32) mit einer Schutzschicht versehen werden, vorzugsweise mit einer Schutzschicht aus MCrAlX, wobei M Nickel (Ni) und/oder Kobalt (Co) und/oder Eisen (Fe) bezeichnet und X Yttrium (Y) und/oder Zirkon (Zr) und/oder Hafnium (Hf).

14. Turbinenschaufel mit einer Schaufelspitze (11) behandelt nach einem Verfahren gemäss einem der vorangehenden Ansprüche.

15. Turbinenschaufel nach Anspruch 14, wobei die Sperrschicht (32) durch Beschichten mit Chrom oder einer Chromlegierung erzeugt ist.

16. Turbinenschaufel nach eine der Ansprüche 14 oder 15, wobei die SiC-Partikel (31) mittels Einbettung in eine metallische Matrix (5) an die Oberfläche der Schaufelspitze gebunden sind.

17. Turbinenschaufel nach Anspruch 16, bei welchem die SiC-Partikel (31) in eine MCrAlX-Matrix (5) eingebettet sind, wobei M Nickel (Ni) und/oder Kobalt (Co) und/oder Eisen (Fe) bezeichnet und X Yttrium (Y) und/oder Zirkon (Zr) und/oder Hafnium (Hf).

## Claims

1. A method for the treatment of the blade tip of a turbine blade in which silicon carbide (SiC) particles (31) are bound to the surface of the blade tip (11) for the production of an abrasive coating, **characterised in that** a self-healing barrier layer (32) is produced on the SiC particles (31) by coating with a material which is selected from the group comprising chrome (Cr), zirconium (Zr), titanium (Ti), tantalum (Ta), niobium (Nb), hafnium (Hf), yttrium (Y), scandium (Sc), thorium (Th), uranium (U), molybdenum (Mo), and also alloys of the named elements.

2. A method in accordance with claim 1 wherein the self-healing barrier layer (32) is produced on the SiC particles (31) before the SiC particles are applied to the surface of the blade tip (11).

3. A method in accordance with any one of the previous claims wherein the barrier layer (32) is produced by coating with chrome or with a chrome alloy.

4. A method in accordance with any one of the previous claims wherein SiC particles (31) are bound to the surface of the blade tip (11) by means of embedding into a metallic matrix (5) at the surface of the blade tip (11).

5. A method in accordance with claim 4, in which the SiC particles (31) are embedded into a MCrAlX matrix (5) wherein M denotes nickel (Ni) and/or cobalt (Co) and/or iron (Fe) and X denotes Yttrium (Y) and/or zirconium (Zr) and/or hafnium (Hf).

6. A method in accordance with any one of the previous claims in which
- the SiC particles (31) provided with the barrier layer (32) are secured to a carrier (6),
- a metallic matrix (5) is subsequently produced into which at least the surface regions of the SiC particles (3) remote from the carrier (6) are embedded, and
- the carrier (6) is removed.

7. A method in accordance with any one of the previous claims in which
- SiC particles (32) are secured to a carrier (6),
- the barrier layer (32) is produced on the SiC particles (31), in particular by means of a PVD method,
- a metallic matrix (5) is subsequently produced by means of coating into which at least the surface regions of the SiC particles (31) remote from the carrier (6) are embedded,
- the surface remote from the carrier (6) is secured to the blade tip (11) and
- the carrier (6) is removed.

8. A method in accordance with claim 6 or claim 7 in which the surface remote from the carrier (6) is secured to the blade tip (11) by means of brazing.

9. A method in accordance with any one of the claims 3 to 8 in which the metallic matrix (5) is produced out of the vapour phase by a physical vapour deposition, in other words a PVD method and in particular by means of a high-speed PVD method.

10. A method in accordance with any one of the claims 1 to 8 in which the SiC particles (31) are bound to the blade tip (11) by means of brazing.

11. A method in accordance with claim 10 wherein, prior to the brazing a MCrAlX layer is initially produced on the blade tip (11), whereby M designates nickel (Ni) and/or cobalt (Co) and/or iron (Fe) and X designates yttrium (Y) and/or zirconium (Zr) and/or hafnium (Hf).

12. A method in accordance with any one of the claims 1 to 8 in which the SiC particles (3) are bound to the blade tip (11) by means of laser welding.

13. A method in accordance with any one of the previous claims in which in addition to the barrier layer (32), the SiC particles (31) are provided with a protective layer, preferably with a protective layer of MCrAlX with M designating nickel (Ni) and/or cobalt (Co) and/or iron (Fe) and X designating yttrium (Y) and/or zirconium (Zr) and/or hafnium (Hf).

14. A turbine blade with a blade tip (11) treated in accordance with a method in accordance with any one of the previous claims.

15. A turbine blade in accordance with claim 14 wherein the barrier layer (32) is produced by coating with chrome or a chrome alloy.

16. A turbine blade in accordance with any one of the claims 14 to 15, wherein the SiC particles (31) are bound to the surface of the blade tip by means of embedding into a metallic matrix.

17. A turbine blade in accordance with claim 16 in which the SiC particles (31) are embedded in a MCrAlX matrix (5) wherein M designates nickel (Ni) and/or cobalt (Co) and/or iron (Fe) and X yttrium (Y) and/or zirconium (Zr) and/or hafnium (Hf).

## Revendications

1. Procédé de traitement de l'extrémité d'une aube de turbine, dans lequel des particules de carbure de silicium (SiC) (31) sont liées à la surface de l'extrémité (11) de l'aube pour former une couche d'effleurement (12), **caractérisé en ce que** sur les particules SiC (31) est formée une couche barrière (32) autorégénératrice au moyen d'un revêtement avec un matériau qui est issu du groupe comportant le chrome (Cr), le zirconium (Zr), le titane (Ti), le tantale (Ta), le niobium (Nb), le hafnium (Hf), l'yttrium (Y), le scandium (Sc), le thorium (Th), l'uranium (U), le molybdène (Mo), ainsi que des alliages des éléments cités.

2. Procédé selon la revendication 1, dans lequel la couche barrière (32) autorégénératrice est formée sur les particules SiC (31) avant que les particules SiC (31) soient déposées sur la surface de l'extrémité (11) de l'aube.

3. Procédé selon l'une quelconque des revendications précédentes, dans lequel la couche barrière (32) est formée par un revêtement avec le chrome ou un alliage de chrome.

4. Procédé selon la revendication 1, dans lequel les particules SiC (31) sont liées à la surface de l'extrémité (11) de l'aube par un enrobage dans une matrice (5) métallique.

5. Procédé selon la revendication 4, dans lequel les particules SiC (31) sont enrobées dans une matrice MCrAlX (5), M désignant le nickel (Ni) et/ou le cobalt (Co) et/ou le fer (Fe), et X désignant l'yttrium (Y) et/ou le zirconium (Zr) et/ou le hafnium (Hf).

6. Procédé selon l'une quelconque des revendications précédentes, dans lequel
- les particules SiC (31) revêtues de la couche barrière (32) sont fixées sur un substrat (6),
- ensuite, est générée par revêtement une matrice (5) métallique, dans laquelle sont enrobées au moins les zones de surface, détournées du substrat (6), des particules SiC (31),
- la surface détournée du substrat (6) est fixée sur l'extrémité (11) de l'aube, et
- le substrat (6) est retiré.

7. Procédé selon l'une quelconque des revendications précédentes, dans lequel
- les particules SiC (31) sont fixées sur un substrat (6),
- la couche barrière (32) est formée sur les particules SiC (31), en particulier par un procédé PVD,
- ensuite, est formée par revêtement une matrice (5) métallique, dans laquelle sont enrobées au moins les zones de surface, détournées du substrat (6), des particules SiC (31),
- la surface détournée du substrat (6) est fixée sur l'extrémité (11) de l'aube, et
- le substrat (6) est retiré.

8. Procédé selon la revendication 6 ou 7, dans lequel la surface détournée du substrat (6) est fixée sur l'extrémité (11) de l'aube par brasage fort.

9. Procédé selon l'une quelconque des revendications 3 à 8, dans lequel la matrice (5) métallique est formée par un dépôt en phase gazeuse par procédé physique, à savoir un procédé PVD, et en particulier par un procédé PVD à vitesse élevée.

10. Procédé selon l'une quelconque des revendications 1 à 8, dans lequel les particules SiC (31) sont liées à l'extrémité (11) de l'aube par brasage fort.

11. Procédé selon la revendication 10, dans lequel avant le brasage fort, on dépose d'abord sur l'extrémité (11) de l'aube une couche de MCrAlX, M désignant le nickel (Ni) et/ou le cobalt (Co) et/ou le fer (Fe), et X désignant l'yttrium (Y) et/ou le zirconium (Zr) et/ou le hafnium (Hf).

12. Procédé selon l'une quelconque des revendications 1 à 8, dans lequel les particules SiC (31) sont liées sur l'extrémité (11) de l'aube par soudage au laser.

13. Procédé selon l'une quelconque des revendications précédentes, dans lequel les particules SiC (31), en plus de la couche barrière (32), sont revêtues d'une couche de protection, de préférence une couche de protection en MCrAlX, M désignant le nickel (Ni) et/ou le cobalt (Co) et/ou le fer (Fe), et X désignant l'yttrium (Y) et/ou le zirconium (Zr) et/ou le hafnium (Hf).

14. Aube de turbine avec une extrémité (11) traitée selon un procédé selon l'une quelconque des revendications précédentes.

15. Aube de turbine selon la revendication 14, dans laquelle la couche barrière (32) est formée par un revêtement avec le chrome ou un alliage de chrome.

16. Aube de turbine selon la revendication 14 ou 15, dans laquelle les particules SiC (31) sont liées à la surface de l'extrémité de l'aube par un enrobage dans une matrice (5) métallique.

17. Aube de turbine selon la revendication 16, dans lequel les particules SiC (31) sont enrobées dans une matrice MCrAlX (5), M désignant le nickel (Ni) et/ou le cobalt (Co) et/ou le fer (Fe), et X désignant l'yttrium (Y) et/ou le zirconium (Zr) et/ou le hafnium (Hf).
